Europäisches Patentamt

European Patent Office

Office européen des brevets

(11) Veröffentlichungsnummer: **0 268 122**
**A1**

## EUROPÄISCHE PATENTANMELDUNG

(21) Anmeldenummer: 87116004.0

(22) Anmeldetag: 30.10.87

(51) Int. Cl.⁴: **G01N 1/22**

(30) Priorität: 04.11.86 DE 3637546

(43) Veröffentlichungstag der Anmeldung:
25.05.88 Patentblatt 88/21

(84) Benannte Vertragsstaaten:
**DE FR GB**

(71) Anmelder: **Siemens Aktiengesellschaft Berlin
und München
Wittelsbacherplatz 2
D-8000 München 2(DE)**

(72) Erfinder: **Ball, Herbert, Dipl.-Phys.
Friedrichstrasse 17 A
D-7552 Durmersheim(DE)**

(54) **Probenaufbereitung für die kontinuierliche Gasanalyse.**

(57) Wesentliche Teile des zwischen Probennahme-vorrichtung und Analysegerät befindlichen, Kühlerfilter und Leitungsabzweige enthaltenden Rohrleitungssystems sind - vom Entnahmeort her gesehen - in einem Winkel zwischen 10 und 90° steigend verlegt.

Die Erfindung wird angewandt zur Aufbereitung von Feststoff-, Flüssigkeitspartikel oder Dämpfe enthaltenden Probegasströmen.

EP 0 268 122 A1

## Probenaufbereitung für die kontinuierliche Gasanalyse

Die Erfindung bezieht sich auf eine Probenaufbereitung für die kontinuierliche Gasanalyse, insbesondere aus einem Feststoff-und/oder Flüssigkeitspartikel und/oder Dämpfe enthaltenden Gasstrom mit einer Probennahmevorrichtung und einem Rohrleitungssystem mit Schalt-und Regelorganen, Filtern, Kühlern und Leitungsabzweigen.

Bei der kontinuierlichen Gasanalyse zur Überwachung industrieller Prozesse stellt sich häufig die Aufgabe, Gase, die unter Druck und bei einer Temperatur über Umgebungstemperatur vorliegen und die sowohl Festpartikel als auch Flüssigkeitspartikel oder Dämpfe enthalten so zu reinigen, daß sie einem Gasanalysegerät zugeführt werden können, ohne daß verwendete Filtereinrichtungen, Rohrleitungen, Armaturen o. ä. durch Ablagerungen in ihrer Funktion beeinträchtig werden.

Üblicherweise wird der aus dem Hauptgasstrom abgenommene Probengasstrom nach Durchgang durch Kühler, Filter usw. mehrfach verzweigt, da für die eigentliche Gasanalyse in der Regel nur ein geringes Probenvolumen notwendig ist. Um Ablagerungen in dem häufig recht umfangreichen Rohrleitungssystem zwischen Gasentnahme und Analysengerät weitgehend auszuschalten, wird als Lösung der genannten Aufgabe erfindungsgemäß vorgeschlagen, wesentliche Teile des Rohrleitungssystems - vom Entnahmeort her gesehen - in einem Winkel zwischen 10° und 85° steigend zu verlegen.

Die abgeschiedenen Feststoff-und Flüssigkeitspartikel sowie Dampfkondensat fließen entgegengesetzt der Strömungsrichtung des Probengasstroms zu tiefer gelegenen Punkten des Rohrleitungssystems, wo sie abgelassen oder entfernt werden können. Damit ist es möglich, auch aus stark verunreinigten Gasströ men einen Probengasstrom aufzubereiten, ohne daß es einer häufigen Wartung und Reinigung der Filter, Ventile und anderer im Rohrleitungssystem angeordneten Teile der Aufbereitungsanlage bedarf.

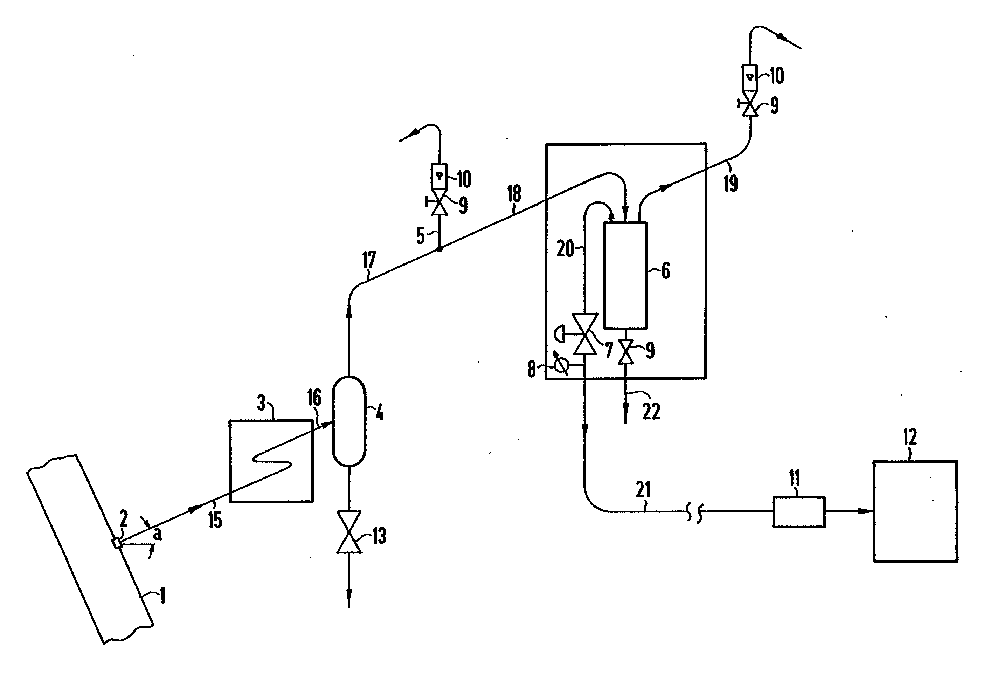

Zur Erläuterung der Erfindung ist in der Figur ein Ausführungsbeispiel schematisch dargestellt unbd im folgenden beschrieben.

Aus einem in einer Rohrleitung fließenden, unter Druck stehenden Prozeßgasstrom 1 wird mittels einer Probennahmevorrichtung 2 ein Probengasstrom abgezweigt und in einem steigend verlegten ersten Rohrleitungsabschnitt 15 dem unteren Anschluß eines Kühlers 3 zugeführt.

Ein zweiter, steigend verlegter Rohrleitungsabschnitt 16 führt von dem oberen Anschluß des Kühlers 3 zu einem Kondensor 4, aus welchem das Kondensat über das Ablaßventil 13 entfernt werden kann.

Ein dritter Rohrleitungsabschnitt 17 führt, steigend verlegt, zu einem Leitungsabzweig 5, welcher ein Nadelventil 9 und einen Strömungsmesser 10 zur Einstellung der Strömung und damit des Strömungsteilerverhältnisses enthält.

Der folgende Rohrleitungsabschnitt 18 führt, von oben senkrecht fallend, in das Gehäuse eines ersten Filters 6, in welchem wiederum eine Verzweigung erfolgt.

Ein Teil des Probengasstroms wird über ein einstellbares Nadelventil 9 aus dem Filterzylinder heraus kontinuierlich nach unten abgeführt, während der Hauptteil des Probengasstroms über einen steigend verlegten Leitungsabschnitt 19 ungefiltert aus dem Oberteil des Filtergehäuses abströmt, wobei die Strömung mittels Nadelventil 9 und Strömungsmesser 10 einstellbar ist.

Ein gefilterter Teilstrom tritt über den Rohrleitungsabschnitt 20 aus dem Filter 6 heraus und wird über einen Druckregler 7 mit Manometer 8 über die Leitung 21 dem Analysengerät 12 zugeführt. Bei Bedarf kann dem Analysengerät noch ein weiteres Filter 11 vorgeschaltet werden.

Der Steigungswinkel a, mit welchem die Leitungsabschnitte 15, 16, 17, 18, 19 verlegt sind, kann zwischen 10° und 85° liegen.

Die zwischen der Entnahmevorrichtung 2 und dem Kondensor 4 anfallenden Verunreinigungen fließen über die Rohrleitungsabschnitte 16, den Kühler 3 und den Rohrleitungsabschnitt 15 in den Prozeßgasstrom 1 zurück, die in den Rohrleitungsabschnitten 17, 18 und 5 anfallenden Verunreinigungen fließen in den Kondensor 4 und können dort über das Ablaßventil 13 entfernt werden. Das gleiche gilt für den Rohrleitungsabschnitt 19, der über den am unteren Ende des Filters 6 austretende Leitung 22 entsorgt wird.

## Ansprüche

1. Probenaufbereitung für die kontinuierliche Gasanalyse, insbesondere aus einem Feststoffund/oder Flüssigkeitspartikel und/oder Dämpfe enthaltenden Gasstrom mit einer Probennahmevorrichtung und einem aus mehreren Abschnitten zusammengesetzten Rohrleitungssystem mit Schalt-und Regelorganen, Filtern, Kühlern und Leitungsabzweigen, **dadurch gekennzeichnet,** daß wesentliche Teile des Rohrleitungssystems (15, 16, 17, 18, 19) vom Entnahmeort her gesehen in einem Winkel (a) zwischen 10° und 85° steigend verlegt sind.

2. Probenaufbereitung nach Anspruch 1, **dadurch gekennzeichnet,** daß der von der Probennahmevorrichtung (2) abgehende Rohrleitungsabschnitt (15) steigend dem unteren Anschluß eines Kühlers (3) zugeführt ist.

3. Probenaufbereitung nach Anspruch 1 und 2, **dadurch gekennzeichnet,** daß der Rohrleitungsabschnitt (16) zwischen dem oberen Anschluß des Kühlers (3) und einem über ein steuerbares Ablaßventil (13) entleerbaren Kondensor (4) steigend verlegt ist.

4. Probenaufbereitung nach Anspruch 3, **dadurch gekennzeichnet,** daß die Rohrleitungsabschnitte (17, 18) zwischen dem Kondensor (4) und einem Filter (6) steigend verlegt sind.

5. Probenaufbereitung nach Anspruch 1 und 4, **dadurch gekennzeichnet,** daß ein zwischen Kondensor (4) und Filter (6) abgehender Leitungsabzweig (5), in welchem ein Nadelventil (9) und ein Strömungsmesser (10) angeordnet sind, steigend verlegt ist.

6. Probenaufbereitung nach Anspruch 1 und 4, **dadurch gekennzeichnet,** daß der Rohrleitungsabschnitt (18) von oben senkrecht fallend bis in die Mitte des Filterzylinders des Filters (6) eingeführt ist, eine erste einstellbare Teilströmung nach unten aus dem Filter (6) über den Rohrleitungsabschnitt (22) herausgeführt ist, ein zweiter Teilstrom ungefiltert über einen steigend verlegten Rohrleitungsabschnitt (19) oben aus dem Filter (6) herausgeführt ist und daß ein dritter gefilterter Teilstrom über einen Rohrleitungsabschnitt (20) mit einem Druckregler (7) dem Gasanalysegerät (12) zugeführt ist.

86 P 4446

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 097 531 (BESTOBELL MOBREY LTD) * Seite 1, Zeilen 92-95; Figur 1 * --- | 1 | G 01 N 1/22 |
| A | DE-A-1 954 426 (PILKINGTON BROTHERS LTD) * Seite 9, Zeile 33 – Seite 10, Zeile 2; Figur 4 * --- | 1 | |
| A | PATENT ABSTRACTS OF JAPAN, Band 7, Nr. 15 (P-169)[1160], 21. Januar 1983; & JP-A-57 171 241 (TOKYO SHIBAURA) 21-10-1982 --- | 1 | |
| A | DE-A-1 947 325 (SCIENTIFIC INDUSTRIES) * Figur 1 * ----- | 1. | |

**RECHERCHIERTE SACHGEBIETE (Int. Cl.4)**

G 01 N 1/00
G 01 N 33/00

Der vorliegende Recherchenbericht wurde für alle Patentansprüche erstellt

| Recherchenort | Abschlußdatum der Recherche | Prüfer |
|---|---|---|
| DEN HAAG | 10-02-1988 | ANTHONY R.G. |